# EUROPÄISCHE PATENTANMELDUNG

(11) **EP 0 992 379 A2**
(43) Veröffentlichungstag der Anmeldung: **12.04.2000**
(21) Anmeldenummer: 99120103.9
(22) Anmeldetag: 08.10.1999
(51) Int. Cl.: B60J 1/00

(54) **Sonnenschutzeinrichtung für Kraftfahrzeuge**

(30) Priorität: 09.10.1998 DE 29818102 U
(71) Anmelder: Fürst, Hans, 97422 Schweinfurt (DE)
(72) Erfinder: Fürst, Hans, 97422 Schweinfurt (DE)
(74) Vertreter: Schneck, Herbert, Dipl.-Phys., Dr.

(57) **Zusammenfassung**

Bei einer Sonnenschutzeinrichtung (1) für Scheiben insbesondere für Kraftfahrzeuge, umfassend eine Befestigungseinrichtung, z. B. in Form wenigstens eines Saugnapfes, zur lösbaren Befestigung an der Innenseite der Scheiben ist zur Realisierung einer leichten Anbringung und Entfernung bei optimalen Schutzeigenschaften vorgesehen, daß die Sonnenschutzeinrichtung (1) ein Kunststoffolien-Laminat aus einer tragenden eigensteifen Folie (5) und einer getönten Absorptionsfolie (6) umfaßt.

## Beschreibung

Die Erfindung richtet sich auf eine Sonnenschutzeinrichtung für Scheiben, insbesondere für Kraftfahrzeuge, umfassend eine Befestigungseinrichtung, z. B. in Form wenigstens eines Saugnapfes, zur lösbaren Befestigung an der Innenseite der Scheiben.

Solche Einrichtungen sind in Form von Gittern, insbesondere aus einem dunklen Material, bekannt. Durch deren Anbringung an der Innenseite eines Fahrzeugfensters ist es möglich, die Intensität der einfallenden Strahlung zu reduzieren, insbesondere um kleinere Kinder bei längeren Autofahrten vor der Sonnenstrahlung zu schützen.

Die bekannten Sonnenschutzeinrichtungen weisen jedoch den Nachteil auf, daß ein Gitter lediglich die Intensität der einfallenden Sonnenstrahlung um einen gewissen Betrag reduzieren kann, nicht aber das Eindringen von UV-Strahlung unterbindet, so daß die Gefahr von Verbrennungen, vor allem auf der empfindlichen Haut von Babys, durch eine solche Einrichtung nicht ausgeschaltet werden kann. Darüber hinaus ergibt sich der Nachteil, daß bei der Verwendung hinreichend engmaschiger Gitter, um eine einigermaßen spürbare Intensitätsreduzierung zu erreichen, die Sicht von Innen nach Außen erheblich beeinträchtigt wird.

Andererseits ist es auch schon bekannt, auf die Innenseite von Kraftfahrzeugfenstern vollflächig eine Strahlung absorbierende Folie aufzubringen. Hierdurch wird eine hohe Strahlungsabsorption bei guter Sicht von Innen nach Außen auch im ultravioletten Bereich erzielt. Ein Nachteil besteht lediglich insoweit, als ein Entfernen der Folie nicht ganz unproblematisch ist, weil Klebemittelrückstände unter Umständen aufwendig behandelt werden müssen. Weiterhin ist die Anbringung einer solchen flächig verklebten Folie relativ kostenaufwendig, so daß Anwender davon abgehalten werden, einen solchen Sonnenschutz anzubringen, wenn vorauszusehen ist, daß er nur relativ kurzzeitig benötigt wird, also z. B. während Babys im Auto transportiert werden.

Hiervon ausgehend liegt der Erfindung die Aufgabe zugrunde, eine Sonnenschutzeinrichtung der eingangs genannten Art so auszugestalten, daß bei optimalen Schutzeigenschaften eine leichte Anbringung und Entfernung realisierbar ist.

Zur Lösung dieser Aufgabe ist vorgesehen, daß die Sonnenschutzeinrichtung ein Kunststoffolien-Laminat aus einer tragenden eigensteifen Folie und einer getönten Absorptionsfolie umfaßt.

Eine derartige Anordnung kann, wie es von Gittern her bekannt ist, an der Innenseite von Kraftfahrzeugscheiben lösbar befestigt werden, z. B. unter Verwendung wenigstens eines Saugnapfes. Trotz dieser leichten Anbringbarkeit und Lösbarkeit werden von den Sonnenschutzeigenschaften her in vollem Umfang die Vorteile einer in erheblichem Umfang intensitätsschwächenden und UV-absorbierenden Folie erreicht, wobei es überraschenderweise gelingt, eine solche vergleichsweise dünne und wenig stabile Folie auf eine andere, tragende und als solche transparente Kunststoffolie aufzukaschieren.

In weiterer Ausgestaltung der Erfindung ist vorgesehen, daß die absorbierende, getönte Folie durch eine metallisierte Polyesterlaminat-Folie gebildet ist und die tragende, transparente Folie durch eine Acryl- oder Polycarbonat-Folie.

Bei einer bevorzugten Ausführungsform ist zur flächigen Festlegung der Sonnenschutzeinrichtung eine Befestigung über Saugnäpfe, vorzugsweise mindestens drei Saugnäpfe, vorgesehen.

Alternativ kann auch ein doppelseitiges Klebeband, insbesondere im Randbereich oder längs des Randbereiches umlaufend vorgesehen sein. Es wird dann eine Doppelscheibenkonstruktion geschaffen, die nicht nur als Sonnenschutz fungiert, sondern auch das Beschlagen verhindert.

Letztlich kann vorgesehen sein, daß das erfindungsgemäße Folien-Laminat der Form der Verglasung bestimmter Autotypen angepaßt ist und für diese dementsprechend angeboten wird.

Nachfolgend wird die Erfindung anhand eines bevorzugten Ausführungsbeispiels in Verbindung mit der Zeichnung näher erläutert. Dabei zeigen:
- Fig. 1: eine Aufsicht auf eine erfindungsgemäße Sonnenschutzeinrichtung und
- Fig. 2: eine schematische Schnittdarstellung.

In der Zeichnung ist eine erfindungsgemäße Sonnenschutzeinrichtung 1 dargestellt, deren Außenkontur 2 einem Kraftfahrzeugfenster eines bestimmten Modells angepaßt ist. Zur Befestigung an der Innenseite der Kraftfahrzeugscheibe dienen vier Saugnäpfe 3. Alternativ könnte, wie gestrichelt angedeutet, auch ein längs der Außenkontur 2 verlaufendes doppelseitiges Klebeband 4 vorgesehen sein, welches beispielsweise durch Abziehen einer Schutzfolie aktiviert werden kann.

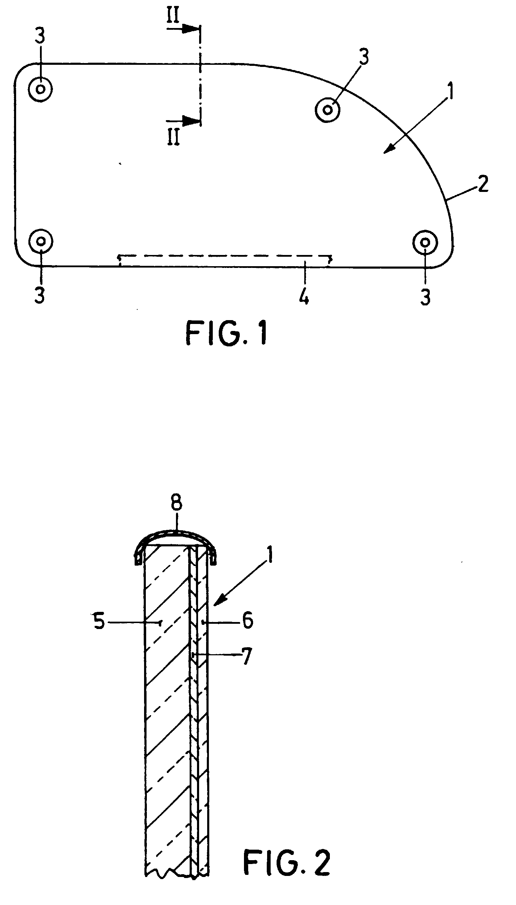

Bei der Teil-Schnittdarstellung gemäß Fig. 2 ist erkennbar, daß eine erfindungsgemäße Sonnenschutzeinrichtung 1 aufgebaut ist aus einer Trägerfolie 5, beispielsweise aus 0,5 mm Polyesterfolie, und einer getönten, sonnenabsorbierten Folie 6, welche mit der Trägerfolie 5 über eine Klebeschicht 7 verbunden ist. Der Randbereich wird von einem Keder 8 umgeben. Die Folie 6 ist durch eine metallisierte Titanium-Polyesterlaminat-Folie gebildet

## Patentansprüche

1. Sonnenschutzeinrichtung für Scheiben insbesondere für Kraftfahrzeuge, umfassend eine Befestigungseinrichtung, z. B. in Form wenigstens eines Saugnapfes, zur lösbaren Befestigung an der Innenseite der Scheiben, **dadurch gekennzeichnet, daß** die Sonnenschutzeinrichtung (1) ein Kunststoffolien-Laminat aus einer tragenden eigensteifen Folie (5) und einer getönten Absorptionsfolie (6) umfaßt.

2. Sonnenschutzeinrichtung nach Anspruch 1, **dadurch gekennzeichnet, daß** die absorbierende, getönte Folie (6) durch eine metallisierte Polyesterlaminat-Folie gebildet ist und die tragende, transparente Folie (5) durch eine Acryl- oder Polycarbonat-Folie.

3. Sonnenschutzeinrichtung nach Anspruch 1, **dadurch gekennzeichnet, daß** zur Befestigung wenigstens drei Saugnäpfe (3) vorgesehen sind.

4. Sonnenschutzeinrichtung nach Anspruch 1, **dadurch gekennzeichnet, daß** zur Befestigung ein doppelseitiges Klebeband (4) vorgesehen ist.
